(19) **Europäisches Patentamt / European Patent Office / Office européen des brevets**

(11) **EP 3 466 552 B1**

(12) **FASCICULE DE BREVET EUROPEEN**

(45) Date de publication et mention
de la délivrance du brevet:
**25.03.2020 Bulletin 2020/13**

(51) Int Cl.:
***B07C 3/08*** *(2006.01)*

(21) Numéro de dépôt: **18188485.9**

(22) Date de dépôt: **10.08.2018**

(54) **ARCHITECTURE D'UN CENTRE DE TRI COMPRENANT UN CONVOYEUR EN BOUCLE**

AUFBAU EINES SORTIERZENTRUMS, DAS EIN IN SCHLEIFE LAUFENDES FÖRDERBAND
UMFASST

ARCHITECTURE OF A SORTING CENTRE COMPRISING A LOOP CONVEYOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.10.2017 FR 1759245**

(43) Date de publication de la demande:
**10.04.2019 Bulletin 2019/15**

(73) Titulaire: **Solystic**
**92220 Bagneux (FR)**

(72) Inventeurs:
• **CHIROL, Luc**
**75016 Paris (FR)**
• **MIETTE, Emmanuel**
**95210 Saint Gratien (FR)**

(74) Mandataire: **Prugneau, Philippe**
**Cabinet Prugneau-Schaub**
**3 avenue Doyen Louis Weil**
**Le Grenat - EUROPOLE**
**38000 Grenoble (FR)**

(56) Documents cités:
**EP-A1- 3 147 038        WO-A1-01/10574**
**US-A1- 2007 203 612**

**Description**

Domaine technique

L'invention se situe dans le domaine de la logistique de transport et de distribution, et plus précisément dans le domaine des infrastructures de tri d'articles comme des lettres ou des colis.

Technique antérieure

Dans le domaine de la logistique, l'efficacité des centres de tri est cruciale pour des questions de vitesse de traitement afin de répondre à la demande, et de rentabilisation des équipements.

Les centres de tris comprennent des dispositifs de convoyage dont l'augmentation des débits se heurte à des limites cinématiques : les accélérations et les vitesses possibles sont limitées par la nécessité de conserver les articles sur lesdits dispositifs de convoyage.

En conséquence, la recherche d'augmentation des débits mène à une augmentation de la taille des centres de tri afin d'augmenter leurs capacités, mais aussi à considérer des solutions optimisant leurs architectures et leurs modes d'utilisations en vu de limiter leur emprise au sol et leur coût tout en améliorant leur efficacité.

Un centre de tri peut être construit autour d'un convoyeur en boucle convoyant des articles en série. Le brevet européen EP3147038 et la demande de brevet US 2007/0203612 décrivent une architecture et un mode d'utilisation d'un centre de tri permettant une utilisation efficace d'un tel convoyeur, celui-ci étant partitionné en zones d'injection alternant avec des zones de sortie.

Des articles arrivant au centre de tri sont placés sur le convoyeur en boucle en mouvement au niveau de zones d'injection avant d'être orientés vers une sortie d'une zone de sortie.

Les articles sont triés en amont du convoyeur en boucle, ou pré-triés, la zone d'injection d'un article donné étant déterminée par sa destination (adresse de livraison) ou tout autre critère de tri, comme sa forme ou son poids. Dans le cas ou le convoyeur comprend deux zones d'injection et deux zones de sortie, cet arrangement permet d'injecter les articles sur des emplacements du convoyeur par une première zone d'injection en amont de la zone de sortie par laquelle ils doivent être déchargés du convoyeur, et de libérer les emplacements avant leur passage au niveau de la seconde zone d'injection.

De cette manière, chaque emplacement du convoyeur peut être utilisé jusqu'à une fois à chaque zone d'injection. Dans le cas où les articles sont séparés en deux flux pré-triés, chaque emplacement pourra être utilisé jusqu'à deux fois par tour.

Exposé de l'invention

L'objet de l'invention est d'optimiser l'efficacité d'utilisation d'un convoyeur à boucle d'un centre de tri au moyen d'une architecture d'infrastructure de tri d'articles combinant des dispositifs de pré-tri pouvant traiter en parallèle des articles réceptionnés au centre de tri avec l'injection des articles selon une topologie dans laquelle les points d'injection des articles pré-triés par différents dispositifs de pré-tri sont entrelacés, ou alternés.

Plus spécifiquement, une infrastructure de tri selon l'invention permet de séparer, indépendamment pour plusieurs zones de réception comprenant chacune, par exemple, un ou plusieurs quais de déchargement où des articles à trier sont déchargés de camions de livraison, des articles à trier arrivant à ces zones de réception d'articles et à les convoyer jusqu'à des zones d'injection d'un convoyeur en boucle qui sont alternées avec des zones de sortie du convoyeur le long de la boucle formé par celui-ci.

A cet effet, l'invention a pour objet une installation logistique pour trier des articles, comprenant un convoyeur en boucle capable de diriger les articles dans des zones de sortie de tri selon un plan de tri associant les zones de sortie aux articles, le convoyeur en boucle comprenant des zones d'injection chacune agencée pour injecter les articles sur le convoyeur et qui sont alternées une à une avec les zones de sortie, caractérisée en ce que l'installation logistique comprend :

- un certain nombre P de dispositifs de pré-tri prévus pour pré-trier les articles à trier selon ledit plan de tri, P étant un nombre entier supérieur ou égal à deux ;
- des lignes de convoyage des articles pré-triés prévues pour convoyer les articles pré-triés des dispositifs de pré-tri vers les zones d'injection, les lignes de convoyage étant agencées de sorte que chaque zone d'injection est reliée à un seul dispositif de pré-tri et chaque dispositif de pré-tri est relié à plusieurs zones d'injection selon une configuration telle que chaque dispositif de pré-tri est relié à une zone d'injection toutes les P zones d'injection considérées séquentiellement le long du convoyeur dans un sens donné.

Avec cette architecture d'infrastructure et la connaissance à l'avance des articles à trier et des informations de tri associées à ces articles, on peut optimiser l'utilisation du convoyeur en répartissant de façon équilibrée les flux d'articles vers les zones d'injection et les zones de sortie.

En particulier, selon l'invention, on peut prévoir une unité de contrôle-commande agencée pour calculer, à partir de la connaissance à l'avance des articles à trier et des informations de tri associées à ces articles, par exemple sous forme de données archivées dans une base de données accessible par l'unité de contrôle-commande, une répartition optimisée des articles pré-triés dans les lignes de convoyage de manière à équilibrer des débits d'articles entre les zones de sortie tout en imposant une contrainte selon laquelle un article injecté sur le convoyeur depuis un dispositif de pré-tri donné relié à plusieurs zones d'injection par des lignes de convoyages correspondantes, qui est injecté sur le convoyeur depuis une certaine zone d'injection reliée audit dispositif de pré-tri donné, est déchargé du convoyeur avant de traverser une autre zone d'injection qui est reliée audit dispositif de pré-tri donné.

L'invention peut avantageusement présenter encore les particularités suivantes :

- les informations de tri sont des adresses de livraison,
- le convoyeur en boucle est constitué de partitions reliées bout à bout, chaque partition comprenant un même nombre de zones d'injection et de zones de sortie, les zones d'injection de chaque partition étant collectivement reliées à chacune des zones de réception par les lignes de convoyage,

- chaque dispositif de pré-tri est prévu pour séparer les articles non triés en Q flux d'articles pré-triés convoyés par les lignes de convoyage, Q étant un nombre entier supérieur ou égal à 2, le convoyeur en boucle comprend I zones d'injection avec I = P $\times$ Q, les zones d'injection étant numérotées de 1 à I et disposées dans cet ordre autour du convoyeur selon un sens S de rotation du convoyeur, et un flux numéroté q avec q variant de 1 à Q part d'un dispositif de pré-tri numéroté p avec p variant de 1 à P et aboutit à la zone d'injection i avec i = p + (P $\times$ (q-1)),
- le convoyeur en boucle est un convoyeur à plateaux,
- les articles sont des articles de courrier ou des colis.

Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :

- la figure 1A représente une architecture d'une installation de tri avec un convoyeur en boucle comprenant des zones d'injection en alternance avec des zones de sortie;
- la figure 1B représente une architecture d'une installation de tri avec un convoyeur en boucle pouvant être utilisée avec une méthode de séparation des articles à trier en flux d'articles pré-triés ;
- la figure 1C représente une architecture d'une installation de tri avec un convoyeur en boucle pouvant être utilisée avec une méthode d'entrelacement de zones d'injection et de zones de sortie d'articles à trier réceptionnés à deux zones de réception ;

- la figure 2 représente une installation de tri avec un convoyeur en boucle selon l'invention, avec deux zones de réception, séparation des articles à trier en deux flux pré-triés par zone de réception, et entrelacement de zones d'injection et de zones de sortie d'articles à trier réceptionnés aux deux zones de réception ;
- la figure 3A représente une zone de réception de la figure 2 et le dispositif de pré-tri associé ;
- la figure 3B représente des portions d'une zone de sortie et d'une zone d'injection du convoyeur en boucle de la figure 2 ; et
- la figure 4 représente des étapes d'une méthode de tri employant l'installation de tri de la figure 2.

Description d'un mode de réalisation

Le but de l'invention est d'améliorer l'efficacité d'un centre de tri en augmentant le débit opérationnel Do d'un convoyeur en boucle qui dépend i) du débit mécanique du convoyeur Dm, fixé par ses caractéristiques physiques (dimensions, vitesse), et ii) du nombre d'utilisations par tour d'un emplacement du convoyeur, représenté par le multiplicateur M.

Le débit opérationnel est défini comme la multiplication du débit mécanique D du convoyeur par le multiplicateur M : Do = Dm $\times$ M. M est une valeur opérationnelle, dépendant du mode d'utilisation du convoyeur, et non une valeur uniquement fixée par la topologie des éléments du centre de tri.

M dépend à la fois de l'architecture du centre et de la façon dont celui-ci est opéré. Pour atteindre son but, l'invention passe par une architecture permettant d'obtenir des multiplicateurs M significativement plus élevés que les architectures conventionnelles.

Ceci permet d'augmenter la capacité opérationnelle du convoyeur à caractéristiques mécaniques constantes.

Méthode de calcul du multiplicateur M

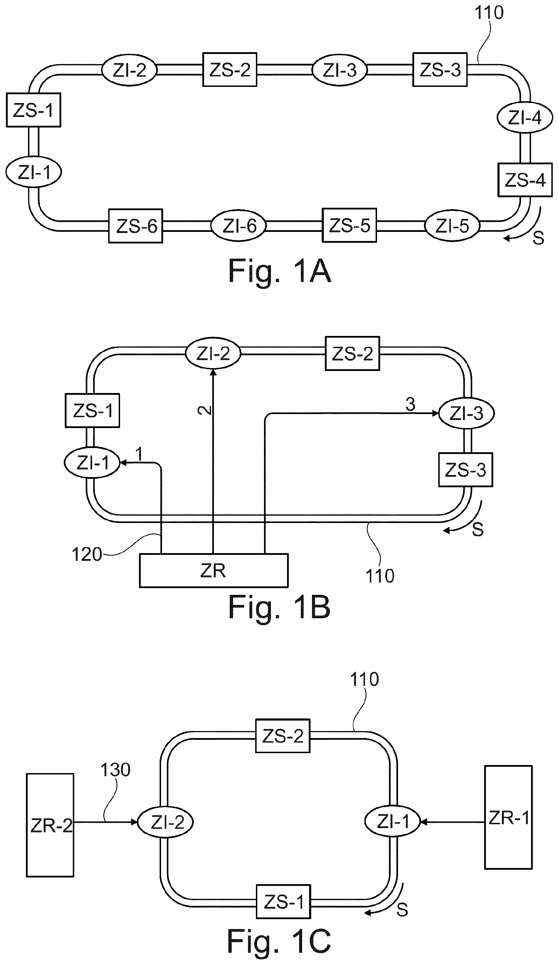

Afin d'analyser les multiplicateurs d'une architecture donnée, il est nécessaire de décrire de manière formelle un système comprenant un convoyeur en boucle comprenant n zones d'injection alternées avec le même nombre de zones de sortie. La figure 1A donne l'exemple d'une telle configuration pour n=6. Le convoyeur à plateaux en boucle 110 est en rotation selon le sens S de rotation.

Les zones d'injection et les zones de sortie sont représentées par ZI et ZS, respectivement, numérotées de 1 à 6, et réparties le long de la boucle formée par le convoyeur selon leur numéro dans le sens de rotation S.

Dans ce système, soient :

M le multiplicateur du système

$d(i)$ le débit d'injection maximal possible de la zone d'injection i (i valant de 1 à n)

$\alpha(i,j)$ la proportion du flux d'articles injecté par la zone d'injection i à destination de la zone de sortie j (j valant de 1 à n),

Nous avons alors

$$\forall i, \qquad \sum_{j=1}^{n} \alpha(i,j) = 1$$

$$M = (\sum_{i=1}^{n} d(i))/D_m = \sum_{i=1}^{n} d(i)/D_m$$

Les coefficients $\alpha(i,j)$ sont des données d'exploitation du système : ils dépendent de la structure des flux traités et de leur répartition entre les zones de sortie. Pour une utilisation optimale du convoyeur, les opérations du système doivent être configurées pour mener à une équi-distribution des volumes entre les différentes zones de sortie, et on aura alors

$$\forall i \ et \ \forall j, \qquad \alpha(i,j) = 1/n$$

Un bilan du trafic en chaque point $P_j$ situé entre la zone d'injection j et la zone de sortie j avec j variant de 1 à n peut être établi.

Les plateaux du trieur sont occupés par les objets injectés à chaque zone d'injection injection i (de 1 à n) et non encore libérés au passage en $P_j$. Soit $o(i,j)$ la proportion des plateaux chargés à la zone d'injection i et encore occupés au passage du point $P_j$. Par définition

$$\forall j, o(j,j) = 1$$

puisqu'en $P_j$ un plateau vient de passer devant la zone d'injection j et qu'aucun article injecté par cette zone d'injection sur ce plateau n'a encore été déchargé vers une sortie du trieur. Les coefficients $o(i,j)$ pour i # j s'expriment en fonction des $\alpha(i,j)$ par les relations ci-dessous :

$$\text{Si } j = 1 \qquad o(i,j) = \sum_{k=i}^{n} \alpha(i,k)$$

$$\text{Si } 1 < j < i \qquad o(i,j) = \sum_{k=i}^{n} \alpha(i,k) + \sum_{k=1}^{j-1} \alpha(i,k)$$

$$\text{Si } i < j \qquad o(i,j) = \sum_{k=i}^{j-1} \alpha(i,k)$$

Le débit maximal du système est atteint lorsque le débit du trieur est maximal après chaque zone d'injection (en chaque point $P_j$ ci-dessus).

Un système de n relations dont les inconnues sont les d(j) avec j variant de 1 à n et dont les coefficients sont construits avec les $\alpha$ (i,j) paramètres d'entrées du système est établi:

$$\forall i, \qquad \sum_{j=1}^{n} o(i,j).d(j) = D_m$$

ou encore

$$\forall i, \qquad \sum_{j=1}^{n} o(i,j).d(j)/D_m = 1$$

Le multiplicateur M est entièrement déterminé par la matrice A des $\alpha(i,j)$. Dans le cas particulier de la figure 1A, avec l'hypothèse que les articles sont équitablement répartis dans les zones de sortie quels que soient leur zones d'injection, chaque coefficient $\alpha(i,j)$ vaut 1/6 et la matrice A s'exprime par

$$A = \begin{bmatrix} 1/6 & 1/6 & 1/6 & 1/6 & 1/6 & 1/6 \\ 1/6 & 1/6 & 1/6 & 1/6 & 1/6 & 1/6 \\ 1/6 & 1/6 & 1/6 & 1/6 & 1/6 & 1/6 \\ 1/6 & 1/6 & 1/6 & 1/6 & 1/6 & 1/6 \\ 1/6 & 1/6 & 1/6 & 1/6 & 1/6 & 1/6 \\ 1/6 & 1/6 & 1/6 & 1/6 & 1/6 & 1/6 \end{bmatrix}$$

La résolution de ce système de relations donne d(1) = d(2) = d(3) = d(4) = d(5) = d(6) = 2/7 D et M = 1,714. Dans cet exemple, un plateau recevant un article injecté dans la zone d'injection 1 et déchargé dans la zone de sortie 6, soit le cas d'un article sur six, n'est utilisé qu'une seule fois dans le tour ; un plateau recevant de même un article injecté dans la zone d'injection 1 et déchargé dans la zone de sortie 1 sera utilisé au moins deux fois.

Séparation en flux pré-triés

La méthode du document de brevet EP3147038 pour augmenter le multiplicateur M repose sur une architecture permettant une séparation des articles arrivant à une zone de réception en amont d'un convoyeur en boucle.

Les articles arrivants sont séparés en n flux pré-triés de tailles identiques à destination de n zones de sortie correspondantes d'un convoyeur en boucle via n zones d'injection correspondantes du convoyeur, chacune des zones d'injection étant située entre deux zones de sortie adjacentes.

Selon cette méthode, les articles injectés par une même zone d'injection sont en totalité évacués du convoyeur par une même zone de sortie.

La figure 1B illustre cette méthode pour n = 3. Des articles collectés dans une zone de réception ZR sont séparés en 3 flux 120 d'articles pré-tries à destination de 3 zones d'injection ZI, ZI-1, ZI-2 et ZI-3, par des lignes de convoyage (non représentées sur la figure).

Le pré-tri est effectué de manière à ce que chaque emplacement du convoyeur chargé par une ligne d'injection dans une zone d'injection ZI soit libéré au niveau d'une zone de sortie avant d'être présenté à la zone d'injection ZI suivante. Plus précisément, les articles sont pré-triés de manière à ce qu'un article à destination d'une sortie de la zone de sortie i sera injecté sur le convoyeur via la zone d'injection i, située en amont de et contigüe à la zone de sortie i, pour i valant 1, 2, ou 3.

Dans le formalisme utilisé plus haut, la matrice A s'exprime par

$$A = \begin{bmatrix} 1 & 0 & 0 \\ 0 & 1 & 0 \\ 0 & 0 & 1 \end{bmatrix}$$

et le multiplicateur M1 vaut 3. Ainsi, chaque plateau du convoyeur peut être utilisé jusqu'à trois fois par tour. Dans le cas général d'un n quelconque, M vaut n.

Entrelacement des zones d'injection et de sortie

Une autre architecture consiste à alimenter un convoyeur par au moins deux zones de réception en parallèle et à entrelacer, ou alterner, les zones de sortie et les zones d'injection correspondantes.

Une telle architecture est illustrée par la figure 1C pour le cas de deux zones de réception ZR en parallèle, ZR-1 et ZR-2, et deux zones de sortie ZS, ZS-1 et ZS-2. Les articles collectés sont transférés en flux 130 à destination de deux zones d'injection ZI, ZI-1 et ZI-2.

Une situation idéale, dans laquelle les articles sont naturellement (sans pré-tri) répartis entre chacune des zones de sortie indépendamment de leur zone de réception, une équi-distribution des articles entre les zones d'injection et entre les zones de sortie est obtenue.

Dans le formalisme utilisé plus haut, la matrice A s'exprime par

$$A = \begin{bmatrix} 1/2 & 1/2 \\ 1/2 & 1/2 \end{bmatrix}$$

et le multiplicateur M3 vaut 4/3.

Combinaison pré-tri / entrelacement

L'invention a pour but de combiner la méthode de séparation des flux avec la méthode d'entrelacement des zones d'injection et de sortie de plusieurs zones de réception, et ce de manière à combiner les avantages, et les multiplicateurs M, de chacune des méthodes. Les inventeurs ont déterminé une architecture permettant cette combinaison.

Selon l'invention, une installation logistique de traitement d'articles à trier comprend un convoyeur en boucle pour convoyer des articles à trier selon un plan de circulation en boucle, le convoyeur comprenant autant de zones d'injection que de zones de sortie.

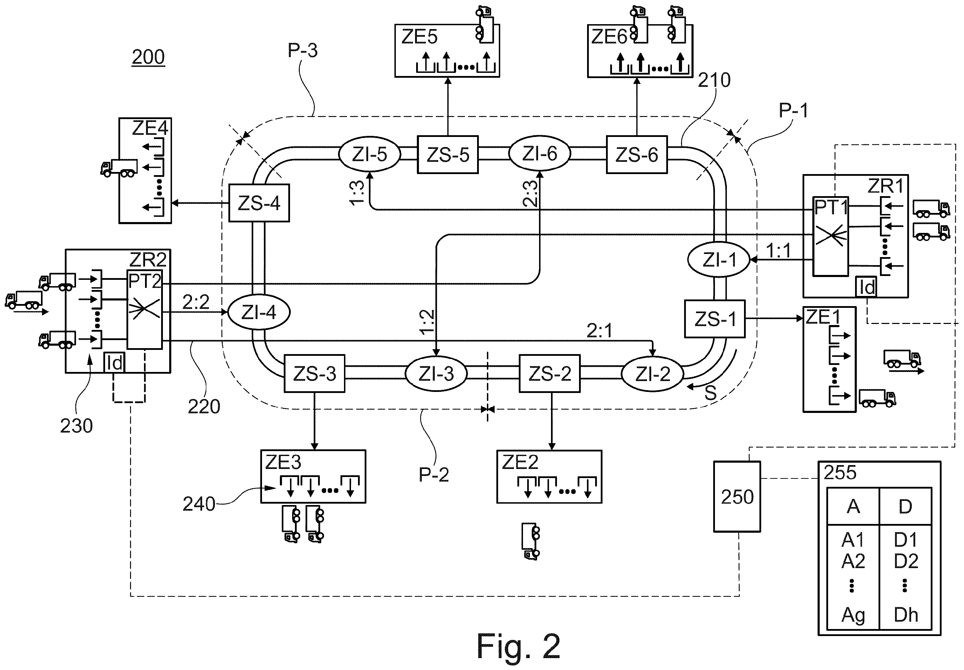

La figure 2 illustre une installation logistique 200 selon l'invention, comprenant, pour exemple, deux zones de réception ZR, ZR1 et ZR2, pour recevoir les articles non triés et six zones d'expéditions ZE, ZE1 à ZE6, pour expédier les articles triés.

Les zones de réception ZR et les zones d'expédition ZE comprennent des quais de déchargement 230 de camions et des quais de chargement 240 de camions, respectivement.

La plate-forme logistique 200 intègre un convoyeur en boucle 210, par exemple un convoyeur à plateaux, comprenant six zones d'injection ZI, ZI-1 à ZI-6, pour injecter les articles sur le convoyeur, les zones d'injection ZI alternant une à une avec six zones de sortie ZS, ZS-1 à ZS-6, pour décharger le convoyeur.

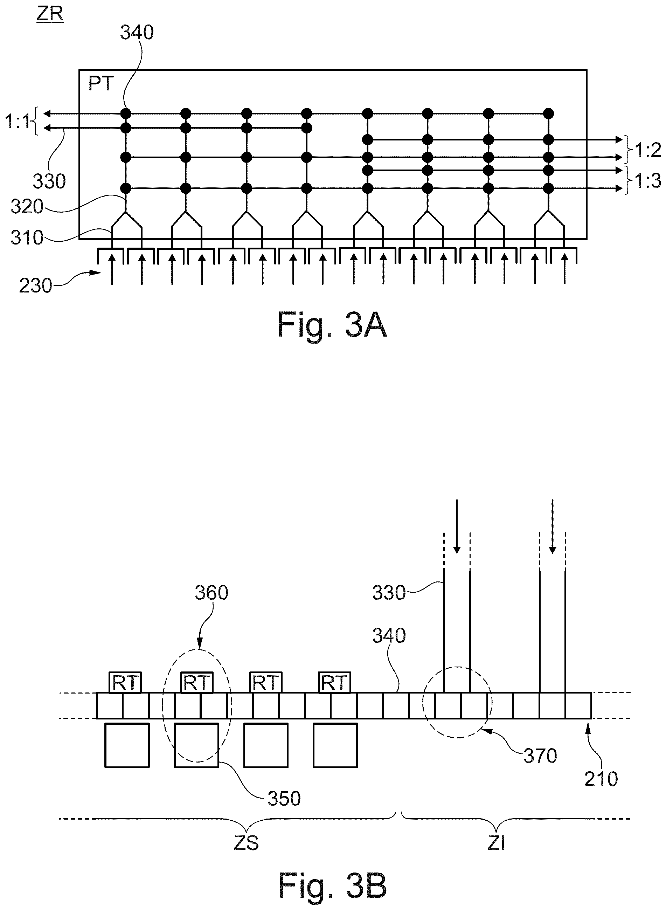

Les articles arrivant sont séparés dans cet exemple en trois flux 220 d'articles pré-triés par des dispositifs de pré-tri PT, PT1 et PT2, à chaque zone de réception ZR, ZR1 et ZR2, soit en six flux 220 au total. Les articles pré-triés par un dispositif de pré-tri PT donné sont répartis entre trois des zones d'injection ZI via des lignes de convoyage 330 illustrées en figure 3A.

Chaque flux 220 est identifié sur la figure 2 par une paire de chiffres p:q, p indiquant le dispositif de pré-tri d'origine du flux d'articles pré-triés et q un numéro de flux. Ici, pour deux zones de réception chacune comprenant un dispositif de pré-tri et trois flux d'articles pré-triés par dispositif de pré-tri, p vaut 1 ou 2 et q vaut 1, 2 ou 3.

Les zones d'injection ZI et de sortie ZS sont réparties le long du convoyeur dans leur ordre de numérotation selon le sens S de rotation du convoyeur.

Chaque zone d'injection ZI-i est située en amont de et contigüe à une zone de sortie ZS-i, i valant de 1 à 6. De cette manière, chaque zone d'injection est contigüe à et entourée par deux des zones de sortie ZS et chaque zone de sortie ZS est contigüe à et entourée par deux des zones d'injection ZI.

Le terme « contigüe » ne s'applique dans ce document qu'aux éléments ZI et ZS de l'invention, et n'exclut pas la présence d'éléments non liés à l'invention entre deux de ces éléments dits « contigües » sur le convoyeur.

De plus, La figure 2 n'illustre qu'un cas particulier, et le nombre de zones de réception ZR et de sortie ZS n'est limité que par des contraintes pratiques d'encombrement et/ou économiques.

Dans la figure 2, les zones d'injection et de sortie sont arrangées de sorte que chaque flux 220 d'articles pré-triés numéroté q avec f = 1, 2 ou 3 part d'un dispositif de pré-tri p avec p = 1 ou 2 et aboutit à une zone d'injection i où i représente un nombre entier de 1 à 6 avec i = p+ (2 × (q-1)), ce qui se généralise au cas d'un nombre arbitraire de zones de réception comprenant P dispositifs de pré-tri pré-triant chacun les articles en Q flux avec i = p + (P (q-1)), où p est compris entre 1 et P, q entre 1 et Q, et i entre 1 et P Q.

Ainsi, dans le cas de la figure 2, avec trois zones de réception, deux flux de pré-tri par zone de réception, et donc six zones de sortie, le dispositif de pré-tri PT1 est relié au zones d'injection ZI-1, ZI-3 et ZI-5, le pré-tri pouvant être réalisé de manière que les colis injectés en ZI-1 sont déchargés en ZS-1 ou ZS-2, les colis injectés en ZI-3 sont déchargés en ZS-3 ou ZS-4 et les colis injectés en ZI-5 sont déchargés en ZS-5 ou ZS-6, et le dispositif de pré-tri PT2 est relié aux zones d'injection ZI-2, ZI-4 et ZI-6, le pré-tri pouvant être réalisé de manière que les colis injectés en ZI-2 sont déchargés en ZS-2 ou ZS-3, les colis injectés en ZI-4 sont déchargés en ZS-4 ou ZS-5 et les colis injectés en ZI-6 sont déchargés en ZS-6 ou ZS-1. Autrement dit, chaque dispositif de pré-tri est relié à une seule zone d'injection toutes les 2 zones d'injection considérées séquentiellement le long du convoyeur dans le sens de rotation du convoyeur et le flux présenté à chaque zone de réception peut être triés dans l'ensemble des zones de sortie.

Le convoyeur en boucle est constitué de partitions P contiguës deux à deux, chaque partition comprenant des zones d'injection ZI collectivement reliées à chacune des zones de réception par les lignes de convoyage 330.

Dans la figure 2, une première partition P-1 comprend, les zones d'injection ZI-1 et ZI-2, une seconde partition P-2 comprend les zones d'injection ZI-3 et ZI-4, et une troisième partition P-3 comprend les zones d'injection ZI-5 et ZI-6. De cette manière, chacune des partitions P est connectée à chacune des zones de réceptions ZR1 et ZR2 par les lignes de convoyage 330.

Les zones de réceptions ZR sont équipées de dispositifs de détection et d'identification Id des articles pour détecter et identifier les articles déchargés des camions, et de dispositifs de pré-tri PT pour pré-trier les articles identifiés de manière à les séparer en trois flux 220 en fonction de leur identification et d'un plan de tri préparé à l'avance.

Chaque flux 220 est pris en charge par une ou plusieurs lignes de convoyage 330 (selon le débit visé) illustrées par la figure 3A. Chaque ligne de convoyage relie l'un des dispositifs de pré-tri PT à un point d'injection de l'une des zones d'injection ZI. Les dispositifs de détection et d'identification peuvent être des lecteurs optiques de codes-barres ou de codes carrés, des capteurs optiques équipés de systèmes de reconnaissance de caractères, ou encore des détecteurs de puces d'identification par radio-identification.

La figure 3A illustre un dispositif de pré-tri PT intégré dans une zone de réception ZR pour pré-trier des articles réceptionnés aux quais de déchargement 230.

Les articles sont placés sur des convoyeurs 320 par des moyens de manutention 310 puis routés sur les lignes de convoyages 330 par des dispositifs de routage 340. Les convoyeurs 320 et les lignes de convoyage 330 peuvent être, par exemple, des convoyeurs à plateaux, à bande, ou à rouleaux. Les moyens de manutention peuvent être un positionnement manuel des articles par des opérateurs ou des systèmes de déchargement automatisés. Dans cette illustration, chacun des trois flux 1:1, 1:2 et 1:3 est pris en charge par deux lignes de convoyage 330, mais cet exemple n'est pas limitatif.

La figure 3B illustre les zones de sortie ZI, qui comprennent des point de sortie 360 où les articles sont déchargés du convoyeur en boucle 340 par des dispositifs de routage RT de sortie.

Le dispositif de routage est conçu pour orienter les articles vers des sorties, et peuvent consister par exemple en un dispositif de basculement des plateaux 340 du convoyeur 210 pour faire chuter les articles dans des bacs de réception 350 matérialisant les sorties. Les bacs peuvent être remplacés par d'autres types de contenant ou de supports tels que des cartons, palettes, chariots ou navettes.

Après le tri, les articles sont transportés dans les bacs jusqu'aux zones d'expédition ZE où sont situés les quais de chargement 240 pour être réexpédiés par camion.

Une unité de contrôle-commande 250 est connectée à une base de donnée 255 listant g articles A, A1 à Ag, à trier dans une période donnée, et les associant à, par exemple, des destinations D, D1 à Dh. G et h représentent des nombres entiers positifs.

L'unité de contrôle-commande 250 est reliée aux dispositifs de détection et d'identification Id et commande les dispositifs de pré-tri PT des zones de réception ZR et des dispositifs de routage RT des zones de sortie ZS.

Un tri efficace des articles repose sur un bon équilibre des débits d'articles entre les zones de sortie ZS. La connaissance à l'avance des articles A à trier et de leurs informations de tri D, telles des destinations, permet d'affecter les destinations aux zones de sortie de tri et de commander les dispositifs de pré-tri des zones de réception et de routage des zones de sortie de manière à équilibrer les débits aux zones de sortie.

Bien entendu, d'autres critères que les destinations peuvent être utilisés pour procéder au tri.

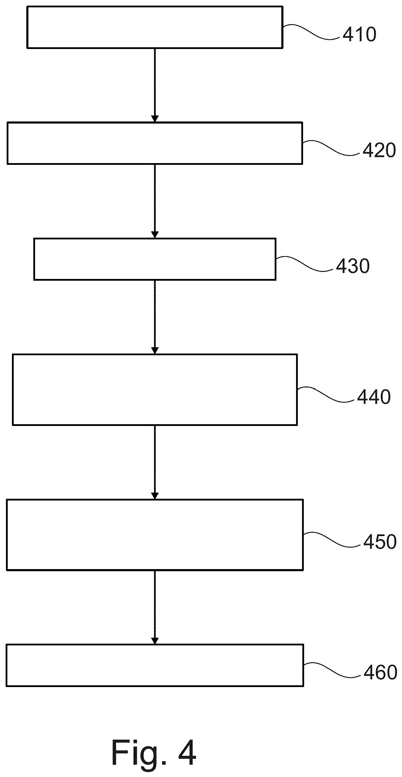

Pour une période donnée, un protocole d'utilisation de la plate-forme logistique 200 est le suivant, illustré par la figure 4.

Dans une étape 410 les données relatives aux articles A à trier au cours de la période et à leurs destinations D sont reçues et stockées dans la base de données 255.

Dans une étape 420, l'unité de contrôle-commande 250 accède aux données de la base de données et élabore un plan de tri pour la période en fonction des volumes d'articles à acheminer à chacune des destinations : à chaque zone de sortie ZS et points de sortie 360 sont affectées une ou plusieurs destinations D. Cette affectation définit le plan de tri.

Une méthode d'affectation des destinations des articles aux zones de sortie en fonction du nombre d'articles à acheminer à chaque destination est la suivante.

Tout d'abord, les destinations sont classées par ordre décroissant du nombre d'articles devant y être acheminés.

Si 25 destinations D sont concernées, elles peuvent être ainsi classées de 1 à 25, soit D01 à D25. Les destinations sont alors affectées aux n zones de sortie du convoyeur par oscillation : les n premières destinations sont assignées aux n premières zones de sortie, respectivement.

Les destinations (n+1) à 2n sont affectées aux sorties dans l'ordre inverse des n premiers départements, et ainsi de suite. Dans le cas illustré en figure 2, avec 6 zones de sortie, les destinations 1 à 6 sont affectées respectivement aux zones de sortie 1 à 6, les destinations 7 à 12 aux zones de sortie 6 à 1, les destinations 13 à 18 aux zones de sortie 1 à 6, les destinations 19 à 24 aux zones de sortie 6 à 1, et la destination 25 à la zone de sortie 1.

Les associations formées sont alors(D01, ZS-1), (D02, ZS-2), (D03, ZS-3), (D04, ZS-4), (D05, ZS-5), (D06, ZS-6), (D07, ZS-6), (D08, ZS-5), (D09, ZS-4), (D10, ZS-3), (D11, ZS-2), (D12, ZS-1), (D13, ZS-1), (D14, ZS-2), (D15, ZS-3), (D16, ZS-4), (D17, ZS-5), (D18, ZS-6), (D19, ZS-6), (D20, ZS-5), (D21, ZS-4), (D22, ZS-3), (D23, ZS-2), (D24, ZS-1) et (D25, ZS-1).

Les zones de sortie sont affectées aux destinations avant l'arrivée des articles au centre de tri.

Après leur réception dans les zones de réceptions ZR au cours d'une étape 430, les articles sont détectés et identifiés par les dispositifs d'identification Id au cours d'une étape 440.

L'unité de contrôle-commande commande alors les dispositifs de pré-tri et de routage des zones de sortie en fonction de l'identification des articles, de manière à ce qu'ils soient acheminés vers les zones d'injection et de sortie adéquates via les lignes de convoyage au cours d'une étape 450. Les articles triés sont convoyés jusqu'aux zones d'expédition pour être expédiés à leurs destinations, ce qui constitue l'étape 460.

Selon l'invention, l'unité de contrôle commande 250 est configurée de sorte que l'affectation des destinations aux zones de sortie ZS et les commandes des dispositifs de pré-tri PT des zones de réception ZR et de routage RT des zones de sortie ZS sont telles qu'un article en provenance d'une zone de réception ZR donnée injecté sur le convoyeur 210 par une première zone d'injection ZI est déchargé du convoyeur 210 avant de traverser une seconde zone d'injection ZI provenant de la zone de réception ZR donnée.

De plus, les débits d'articles dans les zones de sortie ZS doivent être équilibrés.

Dans l'exemple illustré par la figure 2, des articles réceptionnés en zone de réception ZR-1 seront injecté sur le convoyeur par l'une des zones d'injection ZI-1, ZI-3 et ZI-5. Les articles injectés par la zone d'injection ZI-1 seront déchargés du convoyeur par l'une des zones de sorties ZS-1 et ZS-2, de façon à ce que les emplacements du convoyeur utilisés soient libérés et puissent recevoir un nouvel article par la zone d'injection ZI-3.

De même, les articles injectés par la zone d'injection ZI-3 seront déchargés du convoyeur par l'une des zones de sorties ZS-3 et ZS-4, et les articles injectés par la zone d'injection ZI-5 seront déchargés du convoyeur par l'une des zones de sorties ZS-5 et ZS-6. Généralisé au cas d'un nombre n de zones de sortie et de zones d'entrée, l'unité de contrôle-commande commande les dispositifs de pré-tri PT et les dispositifs de routage RT des zones de sortie ZS de manière à ce qu'un article en provenance d'une zone de réception ZR donnée et injecté sur le convoyeur par une première zone d'injection ZI est déchargé du convoyeur avant de traverser une seconde zone d'injection ZI connectée à la zone de réception ZR donnée par l'une des lignes de convoyage 330.

En utilisant le formalisme expliqué plus haut, la matrice A correspondant à cette architecture et à cette méthode d'opération est la suivante :

$$
A = \begin{bmatrix}
1/2 & 1/2 & 0 & 0 & 0 & 0 \\
0 & 1/2 & 1/2 & 0 & 0 & 0 \\
0 & 0 & 1/2 & 1/2 & 0 & 0 \\
0 & 0 & 0 & 1/2 & 1/2 & 0 \\
0 & 0 & 0 & 0 & 1/2 & 1/2 \\
1/2 & 0 & 0 & 0 & 0 & 1/2
\end{bmatrix}
$$

et le multiplicateur M3 vaut 4.

Le multiplicateur M3 = 4 de cette configuration à deux zones de réception et trois flux pré-triés par zone de réception est égal au produit du multiplicateur M1 = 3 de la configuration à une zone de réception et trois flux pré-triés et du multiplicateur M2 = 4/3 de la configuration à deux zones de réception avec entrelacement des zones d'injection et de sortie.

Par cette architecture, combinant pré-tri et entrelacement, les multiplicateurs d'architectures avec pré-tri et entrelacement sont multipliés entre eux.

Ainsi, la présente invention présente une voie d'optimisation des convoyeurs à boucle intégrés dans une installation de tri.

**Revendications**

1. Installation logistique (200) pour trier des articles, comprenant un convoyeur en boucle (210) capable de diriger les articles dans des zones de sortie de tri (ZS, ZS-1, ZS-2, ZS-3, ZS-4, ZS-5, ZS-6) selon un plan de tri associant les zones de sortie aux articles, le convoyeur en boucle comprenant des zones d'injection (ZI, ZI-1, ZI-2, ZI-3, ZI-4, ZI-5, ZI-6) chacune agencée pour injecter les articles sur le convoyeur et qui sont alternées une à une avec les zones de sortie, **caractérisée en ce que** l'installation logistique comprend :

   - un certain nombre P de dispositifs de pré-tri (PT, PT1, PT2) prévus pour pré-trier les articles à trier selon ledit plan de tri, P étant un nombre entier supérieur ou égal à deux ; et
   - des lignes de convoyage (330) des articles pré-triés prévues pour convoyer les articles pré-triés des dispositifs de pré-tri vers les zones d'injection, les lignes de convoyage étant agencées de sorte que chaque zone d'injection est reliée à un seul dispositif de pré-tri et chaque dispositif de pré-tri est relié à plusieurs zones d'injection selon une configuration telle que chaque dispositif de pré-tri est relié à une zone d'injection toutes les P zones d'injection considérées séquentiellement le long du convoyeur dans un sens donné.

2. Installation logistique selon la revendication 1, **caractérisée en ce que** l'installation comprend en outre une unité de contrôle-commande (250) agencée pour calculer, à partir de la connaissance à l'avance des articles (A) à trier et des informations de tri (D) associées à ces articles, une répartition optimisée des articles pré-triés dans les lignes de convoyage (330) de manière à équilibrer des débits d'articles entre les zones de sortie (ZS, ZS-1, ZS-2, ZS-3, ZS-4, ZS-5, ZS-6) tout en imposant une contrainte selon laquelle un article injecté sur le convoyeur depuis un dispositif de pré-tri (PT, PT1, PT2) donné relié à plusieurs zones d'injection (ZI, ZI-1, ZI-2, ZI-3, ZI-4, ZI-5, ZI-6) par des lignes de convoyages correspondantes, qui est injecté sur le convoyeur (210) depuis une certaine zone d'injection reliée audit dispositif de pré-tri donné, est déchargé du convoyeur avant de traverser une autre zone d'injection qui est reliée audit dispositif de pré-tri donné.

3. Installation logistique selon l'une quelconque des revendications précédentes, **caractérisée en ce que** les informations de tri (D) sont des adresses de livraison.

4. Installation logistique selon l'une quelconque des revendications précédentes, **caractérisée en ce que** le convoyeur en boucle est constitué de partitions (P-1, P-2, P-3) reliées bout à bout, chaque partition comprenant un même nombre de zones d'injection (ZI, ZI-1, ZI-2, ZI-3, ZI-4, ZI-5, ZI-6) et de zones de sortie (ZS, ZS-1, ZS-2, ZS-3, ZS-4, ZS-5, ZS-6), les zones d'injection de chaque partition étant collectivement reliées à chacune des zones de réception (ZR1, ZR2) par les lignes de convoyage (330) .

5. Installation logistique selon l'une quelconque des revendications précédentes, **caractérisée en ce que**

   - chaque dispositif de pré-tri (PT) est prévu pour séparer les articles non triés en Q flux (220) d'articles pré-triés convoyés par les lignes de convoyage (330), Q étant un nombre entier supérieur ou égal à 2,
   - le convoyeur en boucle comprend I zones d'injection avec I = P × Q, les zones d'injection étant numérotées de 1 à I et disposées dans cet ordre autour du convoyeur selon un sens S de rotation du convoyeur, et
   - un flux (220) numéroté q avec q variant de 1 à Q part d'un dispositif de pré-tri numéroté p avec p variant de 1 à P et aboutit à la zone d'injection i avec i = p + (P × (q-1)).

6. Installation logistique selon l'une quelconque des revendications précédentes, **caractérisée en ce que** le convoyeur en boucle est un convoyeur à plateaux.

7. Installation logistique selon l'une quelconque des revendications précédentes, **caractérisée en ce que** les articles sont des articles de courrier ou des colis.

**Patentansprüche**

1. Logistische Einrichtung (200) zum Sortieren von Gegenständen, umfassend einen schleifenförmigen Förderer (210), der in der Lage ist, die Gegenstände in Sortierausgangszonen (ZS, ZS-1, ZS-2, ZS-3, ZS-4, ZS-5, ZS-6) gemäß einem Sortierplan, der die Ausgangszonen den Gegenständen zuordnet, zu leiten, wobei der schleifenförmige Förderer Einführzonen (ZI, ZI-1, ZI-2, ZI-3, ZI-4, ZI-5, ZI-6) umfasst, die jeweils ausgebildet sind, um die Gegenstände auf den Förderer einzuführen und die eins zu eins mit den Ausgangszonen alternierend sind, **dadurch gekennzeichnet, dass** die logistische Einrichtung umfasst:

   - eine bestimmte Anzahl P von Vorsortiervorrichtungen (PT, PT1, PT2), die vorgesehen sind, um die zu sortierenden Gegenstände gemäß dem Sortierplan vorzusortieren, wobei P eine ganze Zahl größer oder gleich zwei ist; und
   - Förderlinien (330) der vorsortierten Gegenstände, die vorgesehen sind, um die vorsortierten Gegenstände der Vorsortiervorrichtungen zu den Einführzonen zu fördern, wobei die Förderlinien derart ausgebildet sind, dass jede Einführzone mit einer einzigen Vorsortiervorrichtung und jede Vorsortiervorrichtung mit mehreren Einführzonen gemäß einer derartigen Konfiguration verbunden ist, dass jede Vorsortiervorrichtung alle P Einführzonen, sequenziell betrachtet entlang des Förderers in einer vorgegebenen Richtung, mit einer Einführzone verbunden ist.

2. Logistische Einrichtung nach Anspruch 1, **dadurch gekennzeichnet, dass** die Einrichtung ferner eine Regel-/Steuereinheit (250) umfasst, die ausgebildet ist, um ausgehend von der vorherigen Kenntnis der zu sortierenden Gegenstände (A) und der diesen Gegenständen zugeordneten Sortierinformationen (D) eine optimierte Verteilung der vorsortierten Gegenstände in den Förderlinien (330) derart zu berechnen, dass die Fördermengen von Gegenständen unter den Ausgangszonen (ZS, ZS-1, ZS-2, ZS-3, ZS-4, ZS-5, ZS-6) ausgeglichen werden bei gleichzeitiger Beachtung einer Vorgabe, wonach ein ausgehend von einer gegebenen Vorsortiervorrichtung (PT, PT1, PT2), welche mit mehreren Einführzonen (ZI, ZI-1, ZI-2, ZI-3, ZI-4, ZI-5, ZI-6) durch entsprechende Förderlinien verbunden ist, auf den Förderer eingeführter Gegenstand, der auf den Förderer (210) von einer bestimmten mit der gegebenen Vorsortiervorrichtung verbundenen Einführzone eingeführt wird, von dem Förderer abgeladen wird, bevor eine andere mit der gegebenen Vorsortiervorrichtung verbundene Einführzone durchlaufen wird.

3. Logistische Einrichtung nach einem der vorhergehenden Ansprüche, **dadurch gekennzeichnet, dass** die Sortierinformationen (D) Lieferadressen sind.

4. Logistische Einrichtung nach einem der vorhergehenden Ansprüche, **dadurch gekennzeichnet, dass** der schleifenförmige Förderer aus Ende zu Ende verbundenen Partitionen (P-1, P-2; P-3) gebildet ist, wobei jede Partitionen eine gleiche Anzahl von Einführzonen (ZI, ZI-1, ZI-2, ZI-3, ZI-4, ZI-5, ZI-6) und von Ausgangszonen (ZS, ZS-1, ZS-2, ZS-3, ZS-4, ZS-5, ZS-6) aufweist, wobei die Einführzonen jeder Partition kollektiv mit jeder der Empfangszonen (ZR1, ZR2) durch Förderlinien (330) verbunden sind.

5. Logistische Einrichtung nach einem der vorhergehenden Ansprüche, **dadurch gekennzeichnet, dass**

   - jede Vorsortiervorrichtung (PT) zum Aufteilen der nicht sortierten Gegenstände in Q Flüsse (220) von vorsortierten Gegenständen, die von den Förderlinien (330) gefördert werden, vorgesehen ist, wobei Q eine ganze Zahl größer oder gleich 2 ist,
   - der schleifenförmige Förderer I Einführzonen umfasst, mit $I = P \times Q$, wobei die Einführzonen von 1 bis I nummeriert sind und in dieser Reihenfolge um den Förderer gemäß einer Drehrichtung S des Förderers angeordnet sind, und
   - ein nummerierter q Fluss (220), mit q veränderlich von 1 bis Q, der Teil einer nummerierten p Vorsortiervorrichtung, mit p veränderlich von 1 bis P, ist, in der Einführzone i mündet, mit $i = p + (P \times (q-1))$.

6. Logistische Einrichtung nach einem der vorhergehenden Ansprüche, **dadurch gekennzeichnet, dass** der schleifenförmige Förderer ein Plattenförderer ist.

7. Logistische Einrichtung nach einem der vorhergehenden Ansprüche, **dadurch gekennzeichnet, dass** die Gegenstände postalische Gegenstände oder Pakete sind.

**Claims**

1. A logistics installation (200) for sorting articles, the installation including a looped conveyor (210) capable of directing the articles into sorting outlet zones (ZS, ZS-1, ZS-2, ZS-3, ZS-4, ZS-5, ZS-6) according to sorting plan that associates the outlet zones with the articles, the looped conveyor having injection zones (ZI, ZI-1, ZI-2, ZI-3, ZI-4, ZI-5, ZI-6), each of which is arranged to inject the articles onto the conveyor and which alternate with the outlet zones, said logistics installation being **characterized in that** it further includes:

   • a certain number P of pre-sorting devices (PT1, PT2) designed for pre-sorting the articles to be sorted according to said sorting plan, P being an integer greater than or equal to two; and
   • conveyor lines (330) for conveying the pre-sorted articles from the pre-sorting devices to the injection zones, the conveyor lines being arranged so that each injection zone is connected to one pre-sorting device only and each pre-sorting device is connected to a plurality of injection zones in a configuration in which each pre-sorting device is connected to one in every P injection zones considered sequentially along the conveyor in a given direction.

2. A logistics installation according to claim 1, **characterized in that** the installation further includes a monitoring and control unit (250) arranged to act on the basis of advance knowledge of the articles (A) to be sorted and of the sorting information (D) associated with said articles to compute an optimized distribution for the pre-sorted articles in the conveyor lines (330) in such a manner as to balance the article throughput rates between the outlet zones (ZS, ZS-1, ZS-2, ZS-3, ZS-4, ZS-5, ZS-6) while also imposing a constraint whereby an article injected onto the conveyor from a given pre-sorting device (PT, PT1, PT2) connected to a plurality of injection zones (ZI, ZI-1, ZI-2, ZI-3, ZI-4, ZI-5, ZI-6) via the corresponding conveyor lines, which article is injected onto the conveyor (210) from a certain injection zone connected to said given pre-sorting device, is unloaded from the conveyor before going through another injection zone that is connected to said given pre-sorting device.

3. A logistics installation according to any preceding claim, **characterized in that** the sorting information (D) is constituted by delivery addresses.

4. A logistics installation according to any preceding claim, **characterized in that** the looped conveyor is made up of subdivisions (P-1, P-2, P-3) that are connected together end-to-end, each subdivision including the same number of injection zones (ZI, ZI-1, ZI-2, ZI-3, ZI-4, ZI-5, ZI-6) and of outlet zones (ZS, ZS-1, ZS-2, ZS-3, ZS-4, ZS-5, ZS-6), the injection zones of each subdivision being collectively connected to each of the article-receiving zones (ZR1, ZR2) via the conveyor lines (330).

5. A logistics installation according to any preceding claim, **characterized in that**:

   • each pre-sorting device (PT) is designed to separate the non-sorted articles into Q streams (220) of pre-sorted articles conveyed by the conveyor lines (330), where Q is an integer greater than or equal to 2;
   • the looped conveyor includes I injection zones, where $I = P \times Q$, the injection zones being numbered from 1 to I and being disposed **in that** order around the conveyor in a direction S of rotation of the conveyor; and
   • a stream (220) numbered $\underline{q}$, where $\underline{q}$ lies in the range 1 to Q, goes from a pre-sorting device numbered $\underline{p}$, where $\underline{p}$ lies in the range 1 to P, and leads to the injection zone $\underline{i}$, where $i = p + (P \times (q-1))$.

6. A logistics installation according to any preceding claim, **characterized in that** the looped conveyor is a platform conveyor.

7. A logistics installation according to any preceding claim, **characterized in that** the articles are mailpieces or parcels.

110

ZI-2    ZS-2    ZI-3    ZS-3

ZS-1

ZI-4

ZI-1

ZS-4

ZS-6    ZI-6    ZS-5    ZI-5

S

## Fig. 1A

ZI-2    ZS-2

ZS-1    3    ZI-3

2    ZS-3

ZI-1    1

S

120    110

ZR

## Fig. 1B

110

ZS-2

130

ZR-2    ZI-2    ZI-1    ZR-1

ZS-1    S

## Fig. 1C

Fig. 2

EP 3 466 552 B1

Fig. 3A

Fig. 3B

Fig. 4

## RÉFÉRENCES CITÉES DANS LA DESCRIPTION

**Documents brevets cités dans la description**

- EP 3147038 A

- US 20070203612 A